# FASCICULE DE BREVET EUROPEEN

(11) **EP 3 917 743 B1**
(45) Date de publication et mention de la délivrance du brevet: **10.08.2022**
(21) Numéro de dépôt: 20790317.0
(22) Date de dépôt: 19.10.2020
(51) Int. Cl.: B29C 35/02, B29C 43/52, B29C 70/44, B29C 70/46, B30B 5/02, B30B 15/06, B29C 33/02, B29C 33/38, B29C 43/10, B29C 43/36

(54) **SYSTÈME DE FABRICATION DE PIÈCES THERMOPLASTIQUES**
SYSTEM ZUR HERSTELLUNG VON THERMOPLASTISCHEN TEILEN
SYSTEM FOR MANUFACTURING THERMOPLASTIC PARTS

(30) Priorité: 30.10.2019 FR 1912183
(43) Date de publication de la demande: 08.12.2021
(73) Titulaire: Airbus Atlantic, 17300 Rochefort (FR)
(72) Inventeur: DERUELLE, Romain, 80300 ALBERT (FR)
(74) Mandataire: Argyma
(86) Numéro de dépôt international: PCT/EP2020/079404
(87) Numéro de publication internationale: WO 2021/083712

(56) Documents cités:
- WO-A1-2017/166955
- US-A- 5 236 646

## Description

### Domaine technique

### DOMAINE TECHNIQUE DE L'INVENTION

La présente invention concerne le domaine de la fabrication de pièces aéronautiques et vise plus particulièrement un système de fabrication de pièces thermoplastiques, notamment de grandes dimensions destinées à former la structure d'un avion.

Par grandes dimensions, on entend qu'une des dimensions de la pièce aéronautique est supérieure à 5m.

De manière connue, un avion comprend une structure primaire par laquelle transitent les efforts mécaniques et une structure secondaire montée sur la structure primaire. A ce titre, la structure primaire comprend notamment le fuselage, délimitant le corps de l'avion et définissant son enveloppe structurelle, la voilure, comprenant les deux ailes et permettant d'assurer la portance de l'avion en vol, et l'empennage, placé à l'arrière de l'avion et permettant d'assurer sa stabilité.

La structure primaire comporte notamment plusieurs longerons. Selon l'état de la technique, un longeron possède une section transversale en U de manière à posséder une rigidité élevée. De manière connue, un longeron est réalisé dans un matériau métallique, par exemple en aluminium. Cependant un matériau métallique présente l'inconvénient d'être lourd, aussi les longerons sont de nos jours généralement fabriqués dans un matériau composite.

De manière connue, un longeron en matériau composite est réalisé par imprégnation de fibres de renforts dans une matrice thermodurcissable. Une telle matrice thermodurcissable est figée par polymérisation, c'est-à-dire au moyen d'une réaction chimique au cours de laquelle elle passe de l'état liquide ou visqueux à l'état solide sous l'effet de la chaleur. Lorsque la matrice thermodurcissable est chaude, celle-ci est moulée afin d'obtenir la forme souhaitée, par exemple en une forme en U pour les longerons nécessitant de courber leurs deux branches latérales. Pour cela, la pièce composite thermodurcissable est moulée, par exemple, par thermocompression dans un autoclave. De manière connue, un autoclave est une enceinte hermétique dans laquelle la pression et la température peuvent être contrôlées et augmentées de manière à presser le matériau composite, entre un moule et un contre-moule ou entre un moule et une poche à vide à titre d'exemples, tout en chauffant l'ensemble, afin de donner à la pièce fabriquée sa forme finale.

Si l'autoclave permet de fabriquer des pièces de grandes dimensions, allant jusqu'à 30m de long, elle présente toutefois l'inconvénient d'être extrêmement énergivore et chronophage. La polymérisation est en effet réalisée par chauffage par exemple à 180°C pendant une durée supérieure à huit heures. La cadence de fabrication est donc faible.

Aussi, il existe une volonté de remplacer certaines pièces composites à matrice thermodurcissable par des pièces composites à matrice thermoplastique ayant un cycle de fabrication généralement plus court et une bonne résistance mécanique. La fabrication de telles pièces composites à matrice thermoplastique présente cependant l'inconvénient de nécessiter un chauffage à de très hautes températures, pouvant aller jusqu'à 450°C, afin de consolider la pièce composite.

Une telle pièce est formée à partir de fibres de renfort préalablement noyées dans la matrice thermoplastique, ce qui est connu par l'homme du métier sous le terme de matériau « prépreg ». Le matériau prépreg est chauffé et positionné entre deux moules (ou entre un moule et une poche à vide) pour être mis en forme, par exemple dans une presse comprimant le matériau prépreg au moyen d'un ou plusieurs vérins hydrauliques qui génèrent une force de compression opposée sur les deux moules. Cependant, un tel procédé de fabrication présente l'inconvénient de nécessiter un alignement parfait des moules positionnés en vis-à-vis l'un de l'autre, afin de limiter les risques de déformation de la pièce, ainsi qu'une force de compression équivalente sur toute la longueur des moules, de manière à compresser l'ensemble de la pièce, ce qui est complexe à mettre en œuvre pour la fabrication de pièces de grandes dimensions, comme par exemple un longeron monobloc ou des peaux de fuselage. En pratique, une presse ne permet pas de fabriquer une pièce de dimension supérieure à 8m.

Une solution immédiate serait d'assembler un longeron comprenant plusieurs pièces composites à matrice thermoplastique fabriquées séparément dans l'autoclave ou au moyen d'une presse. Toutefois, l'assemblage de plusieurs pièces réduit la résistance mécanique du longeron, ce qui n'est pas souhaité.

De manière incidente, on connaît par la demande de brevet US2012145703A1 un système de fabrication de pièces composites à matrice thermoplastique dans lequel la pièce composite comporte un matériau ferromagnétique et est placée entre deux moules pris en sandwich entre une couverture chauffante et un support chauffant comprenant un circuit de chauffage inductif. Une poche à vide est montée au-dessus de la couverture chauffante pour former une enceinte fermée où la pression peut être contrôlée pour compresser la pièce composite. Une couche d'étanchéité en silicone peut être intégrée ou montée sur la couverture chauffante et sur le support chauffant pour éviter les déperditions thermiques. La couverture chauffante et le support chauffant peuvent également former une cavité fermée pour concentrer la chaleur. Un tel système permettrait de fabriquer des pièces de grandes dimensions et serait moins énergivore qu'un autoclave ou une presse. Toutefois, pour que les pièces aient une résistance mécanique suffisante, le matériau ferromagnétique doit comporter un alliage de composition précise, qui est onéreux et rare. En outre, le matériau ferromagnétique doit être chauffé à une température inférieure ou égale à sa température maximale de chauffe par induction, dite température de Curie, qui varie sensiblement avec la composition de l'alliage. Par ailleurs, la température est très dépendante de la distance entre le circuit inductif et le matériau ferromagnétique, qui dans le cas d'une géométrie complexe varie au sein de la pièce. Un tel système de fabrication est donc complexe à mettre en œuvre.

On connaît également par la demande de brevet WO2017166955A1 un système et un procédé de fabrication dans lequel une pièce composite est placée sur un moule et re-couverte par une surface chauffante au sein d'un volume fermé par un film étanche pour évacuer l'air.

Un des objectifs de la présente invention est de proposer un système et un procédé de fabrication de pièces thermoplastiques permettant la fabrication de pièces de grandes dimensions d'un seul tenant et de grande résistance mécanique, qui soit le moins énergivore et chronophage possible.

### Exposé de l'invention

### PRESENTATION DE L'INVENTION

A cet effet, l'invention concerne un système de fabrication d'au moins une pièce thermoplastique destinée à être intégrée à une structure primaire d'un d'avion et formée à partir d'une pièce d'ébauche comprenant des fibres de renfort noyées dans une matrice thermoplastique ayant une température de fusion supérieure à 200°C, ledit système de fabrication comprenant :
- au moins un premier organe de moulage et au moins un deuxième organe de moulage configurés pour coopérer ensemble selon un axe vertical, ledit premier organe de moulage comprenant une première face intérieure comprenant une première empreinte configurée pour donner un état de surface à une face supérieure de la pièce d'ébauche, ledit deuxième organe de moulage comprenant une deuxième face intérieure, en vis-à-vis de la première face intérieure, comprenant une deuxième empreinte configurée pour donner un état de surface à une face inférieure de la pièce d'ébauche,
- au moins un premier corps chauffant monté sur le premier organe de moulage selon l'axe vertical et configuré pour chauffer par conduction le premier organe de moulage à une température de chauffage supérieure à 200°C, de manière à chauffer par conduction la pièce d'ébauche à une température supérieure à sa température de fusion,
- au moins un dispositif d'alimentation électrique du premier corps chauffant,
- au moins un premier organe d'isolation thermique positionné sur le premier corps chauffant selon l'axe vertical et au moins un deuxième organe d'isolation thermique positionné sous le deuxième organe de moulage selon l'axe vertical, configurés pour délimiter ensemble une cavité fermée dans laquelle sont positionnés au moins les organes de moulage et le premier corps chauffant,
- au moins une enveloppe flexible et étanche délimitant un volume interne fermé dans lequel sont positionnés au moins les organes de moulage, le premier corps chauffant et les organes d'isolation thermique et
- au moins un organe d'aspiration configuré pour abaisser la pression intérieure dans le volume interne de l'enveloppe par rapport à la pression extérieure, de manière à compresser la pièce d'ébauche entre les organes de moulage au cours de son chauffage, afin de fabriquer la pièce thermoplastique.

Grâce à l'invention, une pièce thermoplastique, notamment de grandes dimensions, peut être fabriquée avec un système moins énergivore et moins chronophage qu'un autoclave ou une presse. En effet, le système de fabrication selon l'invention permet de réaliser un chauffage localisé au sein de la cavité fermée, ce qui réduit le volume de matière à chauffer, les déperditions thermiques et le temps de montée en température de la pièce d'ébauche. Par ailleurs, le chauffage par conduction permet de chauffer la pièce d'ébauche de manière précise et maîtrisée contrairement au chauffage par induction de l'art antérieur. En outre, il n'est pas nécessaire de prévoir un matériau ferromagnétique dans la pièce composite, ce qui réduit le coût de fabrication.

Suivant un aspect préféré, le premier corps chauffant est configuré pour chauffer le premier organe de moulage à une température de chauffage au moins égale à 350°C. De préférence, la température de chauffage est au plus égale à 450°C. A cette température de chauffage, la pièce d'ébauche est avantageusement malléable et peut être modelée aisément pour obtenir la forme de la pièce thermoplastique souhaitée et sa consolidation.

De manière préférée, l'organe d'aspiration est configuré pour générer une différence de pression entre la pression intérieure dans le volume interne et la pression extérieure comprise entre 1bar (1000hPa) et 15bars (15000hPa). De préférence, la différence de pression est de l'ordre de 1bar (1000hPa) si le système de fabrication selon l'invention est placé à l'air libre et atteint 15bars (15000hPa) si le système de fabrication est placé au sein d'une presse ou d'un autoclave. Cette gamme de différences de pression permet avantageusement de compresser suffisamment la pièce d'ébauche pour qu'elle présente la résistance mécanique requise pour être intégrée à la structure primaire d'un avion. Il peut être intéressant de placer le système de fabrication dans un autoclave ou dans une presse pour des pièces de géométrie complexe ou de grande épaisseur. Par grande épaisseur, on désigne une pièce d'épaisseur supérieure à 20mm.

Selon un aspect préféré, le système de fabrication comprend au moins un deuxième corps chauffant positionné entre le deuxième organe de moulage et le deuxième organe d'isolation thermique selon l'axe vertical et configuré pour chauffer par conduction le deuxième organe de moulage à une température de chauffage supérieure à 200°C, de manière à chauffer par conduction la pièce d'ébauche à une température supérieure à sa température de fusion. De préférence, le deuxième corps chauffant est configuré pour chauffer le deuxième organe de moulage à une température de chauffage au moins égale à 350°C. De préférence, la température de chauffage est au plus égale à 450°C. De manière avantageuse, chauffer de part et d'autre la pièce d'ébauche permet de fabriquer une pièce thermoplastique consolidée de manière plus homogène, ce qui est particulièrement souhaitable pour des pièces thermoplastiques de géométrie complexe ou de grande épaisseur. En outre, la présence de deux corps chauffants permet une montée en température plus rapide, donc un gain de temps sur le procédé de fabrication.

Selon un aspect de l'invention, le système de fabrication comprend au moins un dispositif de support positionné sous le deuxième organe d'isolation thermique, l'enveloppe étant montée sur le dispositif de support pour délimiter ensemble le volume interne. Un tel système de fabrication présente l'avantage d'être facile à monter, le dispositif de support formant un socle et l'enveloppe étant montée sur le dispositif de support une fois les organes de moulage, les corps chauffants et les organes d'isolation thermique empilés.

Selon un aspect de l'invention, le deuxième organe d'isolation thermique et le dispositif de support forment une unique entité, ce qui facilite le montage et réduit l'encombrement du système de fabrication.

Selon un autre aspect de l'invention, le deuxième organe de moulage et le deuxième organe d'isolation thermique forment une unique entité. De préférence, le deuxième organe de moulage, le deuxième organe d'isolation thermique et le dispositif de support forment une unique entité, ce qui facilite le montage et réduit l'encombrement du système de fabrication.

De manière préférée, le premier organe d'isolation thermique se présente sous la forme d'une couche de matériau isolant, de préférence comportant un matériau microporeux, de préférence encore comportant de la silice pyrogénée. Préférentiellement, le deuxième organe d'isolation thermique se présente sous la forme d'une couche de matériau isolant, de préférence comportant un matériau microporeux, de préférence encore comportant de la silice pyrogénée. De manière avantageuse, le premier organe d'isolation thermique forme une couverture recouvrant le premier corps chauffant dont les bords sont au contact du deuxième organe d'isolation thermique, pour former une cavité fermée d'isolation. Une telle cavité fermée est ainsi facile à former et de dimensions réduites, ce qui limite la consommation énergétique du système de fabrication. De préférence, le premier organe d'isolation thermique et le deuxième organe d'isolation thermique possèdent une très faible conductivité thermique, de l'ordre de 0,03W/m/K.

De manière préférée, la couche de matériau isolant comporte une épaisseur axiale comprise entre 3mm et 20mm, suffisamment grande pour limiter efficacement les déperditions thermiques et suffisamment faible pour limiter l'encombrement et demeurer flexible pour épouser la forme de l'organe de moulage et optimiser le chauffage.

Préférentiellement, le premier organe de moulage est flexible de manière à donner à la pièce d'ébauche sa forme géométrique précise et un état de surface homogène, lissant les éventuelles inhomogénéités de compression. Un tel premier organe de moulage souple présente en outre l'avantage de comporter une masse réduite et une plus grande maniabilité. De préférence, le deuxième organe de moulage est flexible. Par flexible, on entend une modification de forme de quelques millimètres à quelques centimètres.

Préférentiellement, le premier corps chauffant est configuré pour fournir une puissance surfacique au moins égale à 500W/m², de préférence au moins égale à 1000W/m². Préférentiellement, le deuxième corps chauffant est configuré pour fournir une puissance surfacique au moins égale à 500W/m², de préférence au moins égale à 1000W/m². De manière avantageuse, une telle puissance surfacique assure une température de chauffage suffisante pour fabriquer la pièce thermoplastique.

Préférentiellement, le premier corps chauffant comporte au moins un organe résistif noyé dans un liant électriquement isolant, de préférence comportant du caoutchouc de silicone et/ou des fibres de verre. Préférentiellement, le deuxième corps chauffant comporte au moins un organe résistif noyé dans un liant électriquement isolant, de préférence comportant du caoutchouc de silicone et/ou des fibres de verre.

De préférence, le premier corps chauffant comporte plusieurs portions chauffantes configurées chacune pour fournir une température de chauffage indépendante des autres. De manière avantageuse, une pièce d'ébauche comprenant une géométrie complexe ou différentes épaisseurs peut être consolidée en spécifiant différentes températures de chauffage pour un résultat plus homogène. De préférence, le deuxième corps chauffant comporte plusieurs portions chauffantes configurées chacune pour fournir une température de chauffage indépendante des autres.

Suivant un aspect préféré, un organe résistif se présente sous la forme de fils résistifs. De la chaleur est avantageusement émise tout le long des fils résistifs et non localement. Un tel organe résistif permet ainsi un chauffage plus global que le chauffage par induction de l'art antérieur.

De manière préférée, les fils résistifs forment des serpentins sur la surface du premier corps chauffant en contact avec le premier organe de moulage. De préférence, les fils résistifs forment des serpentins dans le deuxième corps chauffant sur la surface du deuxième corps chauffant en contact avec le deuxième organe de moulage. De manière avantageuse, les corps chauffants chauffent les organes de moulage de manière homogène et globale, ce que ne permet pas le chauffage par induction de l'art antérieur.

De préférence, le système de fabrication comprend au moins un thermorégulateur, configuré pour spécifier au moins au premier corps chauffant la température de chauffage souhaitée. De préférence également, le système de fabrication comprend au moins un thermocouple, configuré pour être en contact avec au moins le premier corps chauffant, de manière à contrôler la température de chauffage. Un tel thermorégulateur et un tel thermocouple forment avantageusement un système d'asservissement en température permettant une consolidation maîtrisée de la pièce d'ébauche. De manière préférée, le thermorégulateur est configuré pour définir des températures de chauffage différentes pour des portions chauffantes différentes.

L'invention concerne également un procédé de fabrication d'au moins une pièce thermoplastique destinée à être intégrée à une structure primaire d'un d'avion et formée à partir d'une pièce d'ébauche comprenant des fibres de renfort noyées dans une matrice thermoplastique ayant une température de fusion supérieure à 200°C, le procédé de fabrication étant réalisé au moyen du système de fabrication présenté précédemment, ledit procédé de fabrication comprenant :
- une étape de placement de la pièce d'ébauche entre la première empreinte du premier organe de moulage et la deuxième empreinte du deuxième organe de moulage,
- une étape de chauffage par conduction d'au moins le premier organe de moulage à une température de chauffage supérieure à 200°C, au moyen du premier corps chauffant, de manière à chauffer par conduction la pièce d'ébauche à une température supérieure à sa température de fusion et
- une étape de dépressurisation du volume interne pendant l'étape de chauffage, grâce à l'organe d'aspiration, de manière à compresser la pièce d'ébauche entre les organes de moulage, afin de fabriquer la pièce thermoplastique.

### Brève description des dessins

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
[fig.1] La figure 1 est une représentation schématique en coupe longitudinale du système de fabrication selon une forme de réalisation de l'invention,
[fig.2] La figure 2 est une représentation en perspective du positionnement du deuxième organe de moulage,
[fig.3] La figure 3 est une représentation en perspective du positionnement de la pièce d'ébauche,
[fig.4] La figure 4 est une représentation en perspective du positionnement du premier organe de moulage,
[fig.5] La figure 5 est une représentation en perspective du positionnement du premier corps chauffant,
[fig.6] La figure 6 est une représentation en perspective du positionnement du premier organe d'isolation thermique,
[fig.7] La figure 7 est une représentation en perspective du positionnement de l'enveloppe, et
[fig.8] La figure 8,
[fig.9] La figure 9 et
[fig.10] La figure 10 sont des représentations schématiques en coupe longitudinale du système de fabrication selon des formes de réalisation alternatives de l'invention.

Il faut noter que les figures exposent l'invention de manière détaillée pour mettre en œuvre l'invention, lesdites figures pouvant bien entendu servir à mieux définir l'invention le cas échéant.

### Description des modes de réalisation

### DESCRIPTION DETAILLEE DE L'INVENTION

De manière connue, les pièces thermoplastiques destinées à être intégrées à une structure primaire d'un avion, telles que des longerons, sont formées à partir de pièces d'ébauche comprenant des fibres de renfort, telles que des fibres de carbone, noyées dans une matrice thermoplastique, autrement dit un liant, ayant une température de fusion supérieure à 200°C, en particulier comprise entre 350°C et 450°C.

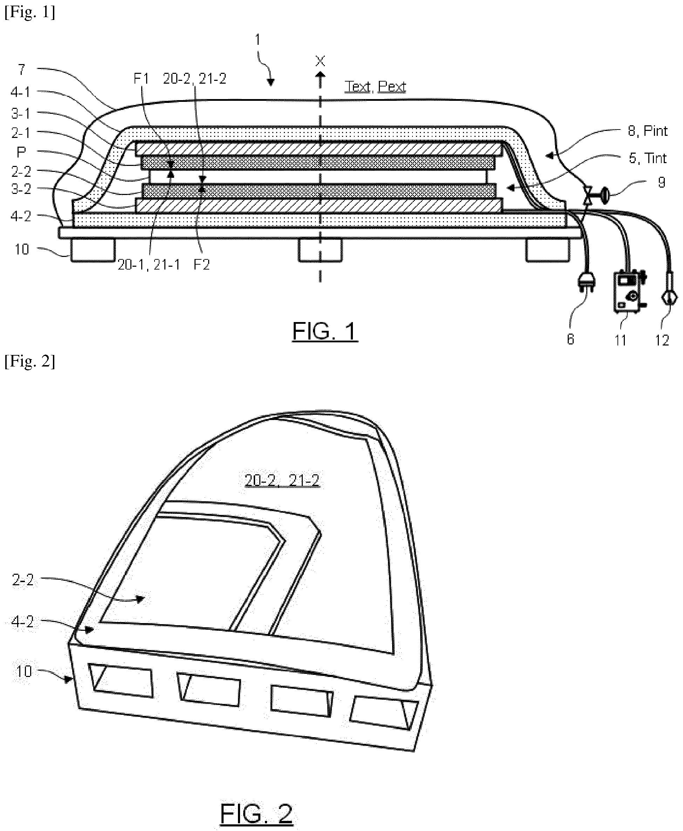

En référence à la figure 1, il est représenté selon l'invention un système de fabrication 1 de telles pièces thermoplastiques comprenant :
- un premier organe de moulage 2-1 et un deuxième organe de moulage 2-2 montés en coopération selon un axe vertical X,
- un premier corps chauffant 3-1 et un deuxième corps chauffant 3-2 positionnés respectivement sur le premier organe de moulage 2-1 et sous le deuxième organe de moulage 2-2,
- un premier organe d'isolation thermique 4-1 et un deuxième organe d'isolation thermique 4-2 positionnés respectivement sur le premier corps chauffant 3-1 et sous le deuxième corps chauffant 3-2 et délimitant ensemble une cavité fermée 5, et
- une enveloppe 7 flexible et étanche délimitant un volume interne 8 fermé dans lequel sont positionnés les organes de moulage 2-1, 2-2, les corps chauffants 3-1, 3-2 et les organes d'isolation thermique 4-1, 4-2.

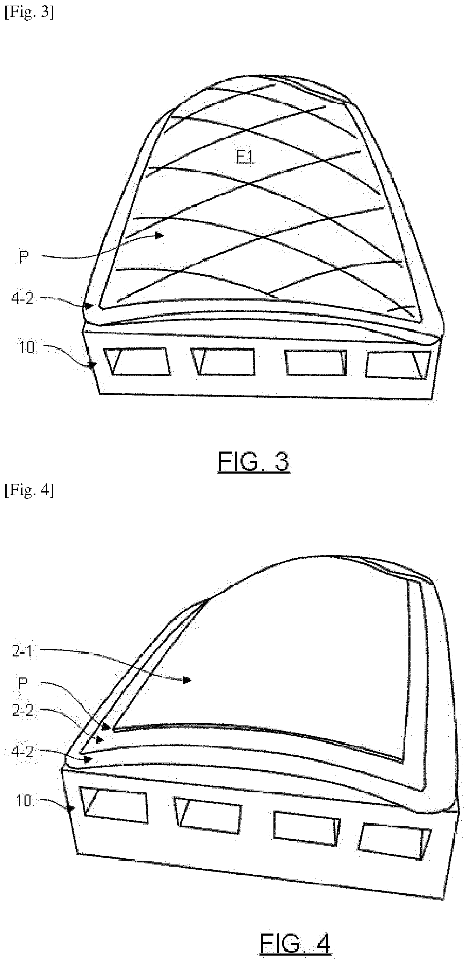

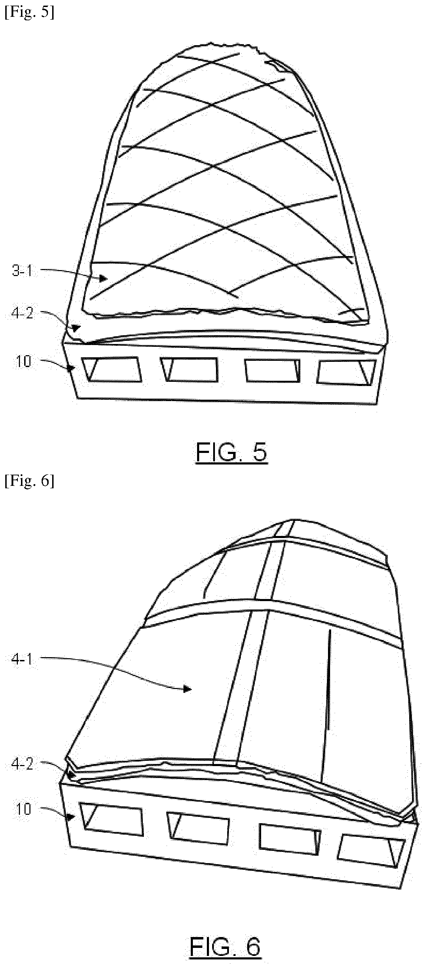

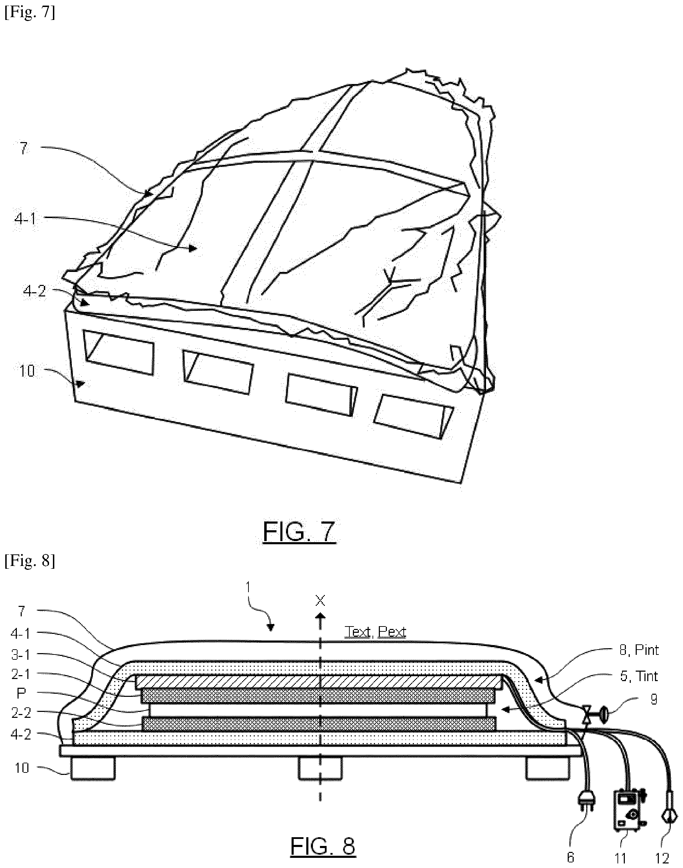

Autrement dit, comme illustré sur la figure 1 à 7, le système de fabrication 1 comprend un empilement d'axe X comprenant de bas en haut :
- le deuxième organe d'isolation thermique 4-2, le deuxième corps chauffant 3-2 et le deuxième organe de moulage 2-2 en référence à la figure 2,
- la pièce d'ébauche P en référence à la figure 3,
- le premier organe de moulage 2-1 en référence à la figure 4,
- le premier corps chauffant 3-1 en référence à la figure 5,
- le premier organe d'isolation thermique 4-1 en référence à la figure 6 et
- l'enveloppe 7 en référence à la figure 7.

La cavité fermée 5 est configurée pour envelopper la pièce d'ébauche P, les organes de moulage 2-1, 2-2 et les corps chauffants 3-1, 3-2. Le volume interne 8 est quant à lui configuré pour envelopper la cavité fermée 5.

Selon l'invention, chaque organe de moulage 2-1, 2-2 comprend une face intérieure 20-1, 20-2 en vis-à-vis l'une de l'autre comprenant une empreinte 21-1, 21-2 configurée pour donner un état de surface à une face supérieure F1 et à une face inférieure F2 de la pièce d'ébauche P.

Selon l'invention, le premier corps chauffant 3-1 et le deuxième corps chauffant 3-2 sont alimentés par une source d'alimentation électrique 6 et sont configurés respectivement pour chauffer par conduction le premier organe de moulage 2-1 et le deuxième organe de moulage 2-2 à une température de chauffage supérieure à 200°C, de préférence comprise entre 350°C et 450°C, de manière à chauffer par conduction la pièce d'ébauche P à une température supérieure à sa température de fusion. Au-dessus de sa température de fusion, la pièce d'ébauche P est en effet malléable, ce qui facilite sa consolidation.

Selon l'invention, les organes d'isolation thermique 4-1, 4-2 sont quant à eux configurés pour limiter les déperditions thermiques vers l'extérieur de la cavité fermée 5, autrement dit pour maintenir la température de chauffage Tint à l'intérieur de la cavité fermée 5. L'enveloppe 7 comporte quant à elle au moins un organe d'aspiration 9 configuré pour abaisser la pression intérieure Pint dans le volume interne 8 par rapport à la pression extérieure Pext, de manière à compresser la pièce d'ébauche P entre les organes de moulage 2-1, 2-2.

Dans l'exemple de la figure 1, deux corps chauffants 3-1, 3-2 sont utilisés pour chauffer de part et d'autre la pièce d'ébauche P mais il va de soi que le système de fabrication 1 pourrait ne comprendre que le premier corps chauffant 3-1 assurant seul le chauffage. Cette forme de réalisation alternative est illustrée sur la figure 8. L'avantage conféré par un chauffage de part et d'autre est de chauffer la pièce d'ébauche P de façon plus globale et homogène, ce qui peut être utile pour une pièce d'ébauche P ayant une géométrie complexe ou une grande épaisseur.

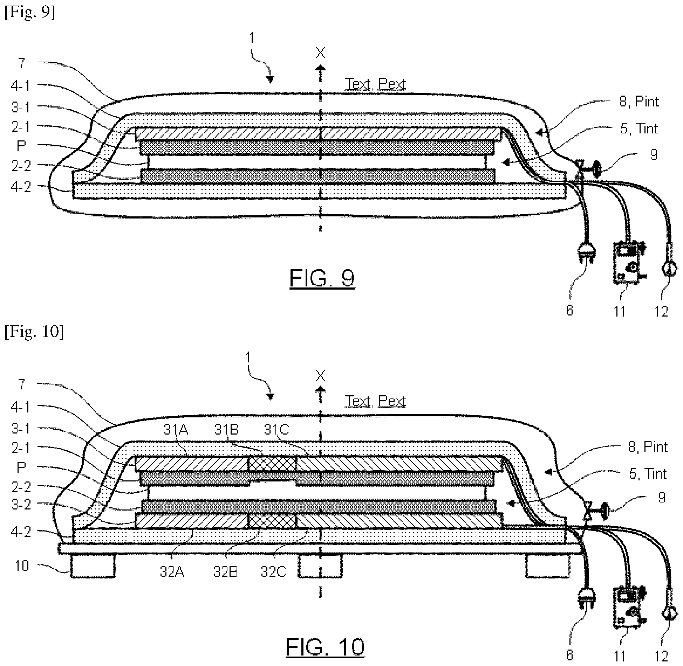

Toujours dans l'exemple de la figure 1, le système de fabrication 1 comprend également un dispositif de support 10 positionné sous le deuxième organe d'isolation thermique 4-2 et configuré pour former le socle du système de fabrication 1. L'enveloppe 7 est par ailleurs dans cet exemple montée sur le dispositif de support 10 pour délimiter ensemble le volume interne 8. Il va toutefois de soi qu'il pourrait ne pas y avoir de dispositif de support 10, l'enveloppe 7 délimitant seule le volume interne 8 dans une forme de réalisation alternative représentée sur la figure 9.

Toujours dans l'exemple de la figure 1, le système de fabrication 1 comprend un thermocouple 12 relié à chaque corps chauffant 3-1, 3-2 et configuré pour relever la température de chauffage Tint. Le système de fabrication 1 comprend en outre un thermorégulateur 11 relié à chaque corps chauffant 3-1, 3-2 et configuré pour programmer la température de chauffage Tint souhaitée.

Il va de soi que le système de fabrication 1 pourrait comprendre un nombre quelconque de thermocouples 12 et/ou de thermorégulateurs 11, en particulier davantage de thermocouples 12 localisés dans la cavité fermée 5 pour y contrôler l'homogénéité de la température de chauffage Tint.

A noter que dans l'exemple de la figure 1, le système de fabrication 1 permet la fabrication d'une unique pièce d'ébauche P. Il va cependant de soi que le système de fabrication 1 pourrait comprendre plus de deux organes de moulage 2-1, 2-2, tel que quatre organes de moulage 2-1, 2-2 coopérant deux à deux pour fabriquer deux pièces d'ébauche P simultanément. Le nombre de corps chauffants 3-1, 3-2 et le nombre d'organes d'isolation thermique 4-1, 4-2 devraient alors être adaptés en conséquence. Dans l'exemple de deux pièces d'ébauche P fabriquées simultanément, ce nombre peut être doublé de sorte à former deux systèmes de fabrication 1 indépendants l'un au-dessus de l'autre selon l'axe X. Autrement, un ou plusieurs corps chauffants 3-1, 3-2 et/ou organes d'isolation thermique 4-1, 4-2 pourraient être partagés pour la fabrication de plusieurs pièces d'ébauche P, pour optimiser le coût de fabrication.

On décrit par la suite plus précisément les caractéristiques structurelles et fonctionnelles des organes de moulage 2-1, 2-2, des corps chauffants 3-1, 3-2, des organes d'isolation thermique 4-1, 4-2, du dispositif de support 10 et enfin de l'enveloppe 7.

On décrit dans un premier temps les organes de moulage 2-1, 2-2 en référence aux figures 2 à 4.

Dans l'exemple des figures 2 et 4, chaque organe de moulage 2-1, 2-2 se présente sous la forme d'un moule de faible épaisseur axiale, à savoir comprise entre 0,2mm et 4mm. Un tel moule est connu de l'homme du métier sous le terme de « caul plate » et présente l'avantage d'être flexible, c'est-à-dire de pouvoir se déformer légèrement sous l'effet d'une contrainte, par exemple de compression. Ainsi dans le cas d'une compression présentant certaines inhomogénéités, un caul plate, malgré sa rigidité générale, peut se déformer légèrement, à savoir de quelques millimètres à quelques centimètres, pour donner son état de surface à l'ensemble de la face supérieure F1 ou inférieure F2 de la pièce d'ébauche P et non aux zones de plus grande compression uniquement. Il va cependant de soi qu'un ou plusieurs organes de moulage 2-1, 2-2 pourrait se présenter sous la forme d'un moule rigide. En particulier, le deuxième organe de moulage 2-2 configuré pour être sous la pièce d'ébauche P pourrait se présenter sous la forme d'un moule rigide pour assurer une fonction de support, en complément ou en l'absence du dispositif de support 10.

De préférence, chaque organe de moulage 2-1, 2-2 comporte un matériau résistant à des températures pouvant atteindre 450°C, préférentiellement de dilatation thermique sensiblement égale à celle de la pièce d'ébauche P. Un tel matériau peut être de l'inox, de l'aluminium, de l'acier ou du nickel à titre d'exemples non limitatifs. Il va de soi que le premier organe de moulage 2-1 peut comprendre un matériau différent du deuxième organe de moulage 2-2.

Par ailleurs, comme illustré sur les figures 1 à 4, les organes de moulage 2-1, 2-2 forment ensemble un logement ouvert pour la pièce d'ébauche P, à la manière d'un gaufrier, de sorte que les surplus de matrice thermoplastique puissent être évacués et que les contraintes de compactage transitent par la pièce d'ébauche P. Dans l'exemple des figures 1, 2 et 4, la première empreinte 21-1 du premier organe de moulage 2-1 et la deuxième empreinte 21-2 du deuxième organe de moulage 2-2 ne sont ainsi pas au contact l'une de l'autre de sorte que les surplus de résine puissent être évacués au niveau des bords latéraux de la pièce d'ébauche P. De préférence, comme illustré sur la figure 4, les organes de moulage 2-1, 2-2 sont configurés pour posséder une surface de dimension légèrement supérieure à celle de la pièce d'ébauche P, de manière à ne pas contraindre les bords latéraux de la pièce d'ébauche P et ainsi permettre une meilleure compression.

On décrit par la suite le premier corps chauffant 3-1 en référence à la figure 5, cette description étant valable pour le deuxième corps chauffant 3-2 et tout éventuel corps chauffant supplémentaire du système de fabrication 1.

Comme illustré sur la figure 5, le premier corps chauffant 3-1 se présente sous la forme d'une couche en contact direct avec le premier organe de moulage 2-1 (ou le deuxième organe de moulage 2-2 dans le cas du deuxième corps chauffant 3-2), connue sous le terme de « couverture chauffante », de manière à assurer un chauffage conductif efficient. De préférence, le premier corps chauffant 3-1 est souple de manière à adopter la forme du premier organe de moulage 2-1.

Toujours en référence à la figure 5, le premier corps chauffant 3-1 comprend un organe résistif, autrement dit produisant de la chaleur par effet Joule, qui est intégré dans un liant électriquement isolant de manière à ne pas propager l'électricité en dehors de l'organe résistif. Un tel premier corps chauffant 3-1 est connu de l'homme du métier, par exemple sous la dénomination commerciale « FGH and SXH High Temperature Composite Curing Blankets » de la société BRISKHEAT. De préférence, l'organe résistif couvre l'ensemble de la surface du premier corps chauffant 3-1 de manière à fournir un chauffage homogène. Il va de soi que le premier corps chauffant 3-1 peut également comprendre plusieurs organes résistifs couvrant ensemble l'ensemble de la surface du premier corps chauffant 3-1. A titre d'exemple, le premier corps chauffant 3-1 peut comporter du caoutchouc de silicone renforcé de fibres de verre dans lequel sont brodés des fils résistifs. De préférence, les fils résistifs sont disposés en forme de serpentins de manière à couvrir toute la surface du premier corps chauffant 3-1. 11 va cependant de soi que les fils résistifs pourraient être positionnés de manière hétérogène voire de manière quelconque. Il va également de soi que l'organe résistif pourrait se présenter sous une autre forme.

De préférence, le premier corps chauffant 3-1 est configuré pour fournir une puissance surfacique au moins égale à 500W/m², de préférence au moins égale à 1000W/m² de manière à ce que la température de chauffage Tint dans la cavité fermée 5 soit au moins égale à 200°C, de préférence comprise entre 350°C et 400°C. La température de chauffage Tint peut être programmée par le thermorégulateur 11 et contrôlée par le thermocouple 12.

En référence à la figure 10 illustrant une forme alternative de réalisation de l'invention, le premier corps chauffant 3-1 comprend plusieurs portions chauffantes 31A, 31B, 31C programmées indépendamment les unes des autres par le thermorégulateur 11, de manière à pouvoir fournir une puissance surfacique différente. Cette forme de réalisation alternative présente un réel intérêt dans le cas d'une pièce d'ébauche P possédant une épaisseur variable, telle que celle représentée sur la figure 10. Dans cet exemple, la pièce d'ébauche P comprend une surépaisseur et le premier organe de moulage 2-1 comprend trois portions chauffantes 31A, 31B, 31C, une deuxième portion chauffante 31B étant positionnée dans le prolongement axial de la surépaisseur, la première et la troisième portions chauffantes 31A, 31C couvrant le reste de la surface de la pièce d'ébauche P. La deuxième portion chauffante 31B est dans cet exemple configurée pour fournir une quantité de chaleur supérieure à celle de la première et la troisième portions chauffantes 31A, 31C pour que la surépaisseur soit consolidée de manière homogène, notamment à cœur. A noter que dans cet exemple, le deuxième corps chauffant 3-2 comprend également trois portions chauffantes 32A, 32B, 32C symétriques par rapport aux portions chauffantes 31A, 31B, 31C du premier corps chauffant 3-1.

On décrit par la suite les organes d'isolation thermique 4-1, 4-2 en référence à la figure 6.

Comme illustré sur la figure 6, chaque organe d'isolation thermique 4-1, 4-2 se présente de préférence sous la forme d'une couche isolante de faible épaisseur axiale, comprise entre 3mm et 20mm. Un tel organe d'isolation thermique 4-1, 4-2 présente l'avantage d'être souple et ainsi d'adopter la forme sur laquelle elle est montée.

Toujours en référence à la figure 6, chaque organe d'isolation thermique 4-1, 4-2 possède une surface de dimension supérieure à celle des corps chauffants. De manière avantageuse, les bords latéraux du premier organe d'isolation thermique 4-1 peuvent ainsi se courber pour être en contact avec les bords latéraux du deuxième organe d'isolation thermique 4-2, ce qui forme la cavité fermée 5 de manière simple.

Il va de soi que la cavité fermée 5 pourrait être formée autrement. A titre d'exemple, les bords latéraux des organes d'isolation thermique 4-1, 4-2 pourraient être reliés entre eux par collage, par une couture ou de manière autre.

Chaque organe d'isolation thermique 4-1, 4-2 comporte par ailleurs un matériau de faible conductivité thermique, de préférence inférieure à 0,05 W/m/K, de manière à limiter efficacement les déperditions thermiques et maintenir la température de chauffage Tint souhaitée. Le matériau est en outre de préférence microporeux. Un tel matériau peut être de la silice pyrogénée à titre d'exemple.

De manière avantageuse, les organes d'isolation thermique 4-1, 4-2 permettent de fabriquer des pièces thermoplastiques de manière beaucoup moins énergivore que l'autoclave de l'art antérieur. Les organes d'isolation thermique 4-1, 4-2 présentent en outre l'avantage d'accélérer la montée en température de la pièce d'ébauche P.

On décrit par la suite le dispositif de support 10 en référence aux figures 2 à 7.

Comme illustré sur les figures 2 à 7, le dispositif de support 10 se présente sous la forme d'un socle configuré pour supporter la masse du système de fabrication 1. Le dispositif de support 10 peut comprendre des pieds télescopiques pour être surélevé à la hauteur souhaitée ou non.

Grâce aux organes d'isolation thermique 4-1, 4-2, le dispositif de support 10 n'est avantageusement pas au contact de la température de chauffage Tint. Le dispositif de support 10 comporte ainsi de préférence un matériau résistant à des températures de l'ordre de 70°C, avantageusement économique et pérenne. Il va cependant de soi que le dispositif de support 10 pourrait comprendre un autre matériau. En particulier, suivant une forme alternative de l'invention (non représentée), le deuxième organe d'isolation thermique 4-2 et le dispositif de support forment une unique entité afin de limiter l'encombrement. Autrement dit, le premier organe d'isolation thermique 4-1 et le dispositif de support 10 forment ensemble la cavité fermée 5. Dans cette forme de réalisation, le dispositif de support 10 comprend un matériau à la fois résistant à des températures atteignant 400°C et isolant, tel qu'un alliage comprenant de l'alumine et du dioxyde de silicium connu de l'homme du métier sous le nom de « sizal ».

Outre sa fonction de support, le dispositif de support 10 est également de préférence configuré pour donner la forme globale de la pièce d'ébauche P. Plus précisément, les organes de moulage 2-1, 2-2 étant de préférence légèrement flexibles, le dispositif de support 10 permet de donner la forme globale de la pièce d'ébauche P tandis que les organes de moulage 2-1, 2-2 donnent l'état de surface de la face inférieure F2 et de la face supérieure F2 de la pièce d'ébauche P. Dans l'exemple des figures 2 à 7, le dispositif de support 10 se présente ainsi sous la forme d'un socle incurvé pour fabriquer une pièce thermoplastique incurvée. Il va de soi que le dispositif de support peut posséder une forme quelconque, tel que plane ou de géométrie plus complexe.

On décrit par la suite l'enveloppe 7 en référence aux figures 7 et 9.

Comme illustré sur les figures 7 et 9, l'enveloppe 7 se présente de préférence sous la forme d'une membrane souple, connue de l'homme du métier sous le terme de « bagging ». De même que le dispositif de support 10, grâce aux organes d'isolation thermique 4-1, 4-2, l'enveloppe 7 n'est avantageusement pas au contact de la température de chauffage Tint. L'enveloppe 7 comporte ainsi de préférence un matériau résistant à des températures atteignant 180°C, tel que du nylon à titre d'exemple. Un tel matériau est avantageusement économique et pérenne.

Dans l'exemple de la figure 7, l'enveloppe 7 est montée sur le dispositif de support 10 de manière à délimiter ensemble le volume interne 8. Un joint d'étanchéité peut être ajouté à la jonction entre l'enveloppe 7 et le dispositif de support 10 pour assurer l'étanchéité. Suivant une forme de réalisation alternative illustrée sur la figure 9, l'enveloppe 7 forme à elle seule le volume interne 8, en l'absence de dispositif de support 10.

Comme illustré sur les figures 1 et 9, le système de fabrication 1 comprend au moins un organe d'aspiration 9 configuré pour générer une différence de pression entre la pression intérieure Pint dans le volume interne 8 et la pression extérieure Pext, de préférence comprise entre 1bar (1000hPa) et 15bars (15000hPa). De manière avantageuse, cette différence de pression permet de compresser la pièce d'ébauche P, chauffée par ailleurs donc malléable de manière à fabriquer une pièce thermoplastique consolidée et de résistance mécanique répondant aux exigences aéronautiques. De préférence, la différence de pression est de l'ordre de 1bar (1000hPa), ce qui permet de fabriquer une pièce thermoplastique de géométrie simple. Toutefois, pour des géométries plus complexes ou pour des pièces comprenant une grande épaisseur, la différence de pression peut augmenter jusqu'à 15bars (15000hPa). Le système de fabrication 1 est alors de préférence placé au sein d'un autoclave ou d'une presse.

De préférence, l'organe d'aspiration 9 se présente sous la forme d'une valve d'aspiration montée dans un orifice de l'enveloppe 7 et reliée à un organe de pompage, tel qu'une pompe à vide. La valve d'aspiration peut également être montée dans un orifice du dispositif de support 10. Il va de soi que l'organe d'aspiration 9 peut se présenter sous une autre forme quelconque, du moment qu'il génère la différence de pression souhaitée.

On décrit par la suite un procédé de fabrication d'une pièce thermoplastique au moyen du système de fabrication 1 selon l'invention précédemment présenté.

Dans un premier temps, comme illustré sur les figures 1 à 7, la pièce d'ébauche P est placée entre la première empreinte 21-1 du premier organe de moulage 2-1 et la deuxième empreinte 21-2 du deuxième organe de moulage 2-2. Pour cela, le système de fabrication 1 est monté en empilant de bas en haut le deuxième organe d'isolation thermique 4-2, le deuxième organe de moulage 2-2, la pièce d'ébauche P, le premier organe de moulage 2-1, le premier corps chauffant 3-1, le premier organe d'isolation thermique 4-1 et l'enveloppe 7 en référence à la figure 7. A la fin de cette étape de placement, les organes d'isolation thermique 4-1, 4-2 forment une cavité fermée 5 dans laquelle est positionnée la pièce d'ébauche P et l'enveloppe 7 forme un volume interne 8 dans lequel est positionné la cavité fermée 5.

Le procédé de fabrication comporte ensuite une étape de chauffage des corps chauffants 3-1, 3-2 à une température de chauffage Tint supérieure à 200°C de manière à chauffer par conduction la pièce d'ébauche P à une température supérieure à sa température de fusion. Une fois la température de fusion dépassée, la pièce d'ébauche P devient malléable.

Le procédé de fabrication comporte également une étape de dépressurisation, réalisée au cours de l'étape de chauffage, pendant laquelle la pression intérieure Pint du volume interne 8 est réduite grâce à l'organe d'aspiration 9, de manière à compresser la pièce d'ébauche P, alors malléable, entre les organes de moulage 2-1, 2-2. Les bulles d'air contenues dans la pièce d'ébauche P sont alors éliminées ce qui permet la fabrication d'une pièce thermoplastique consolidée.

Grâce à l'invention, une pièce thermoplastique, notamment de grandes dimensions, peut être fabriquée avec une résistance mécanique répondant aux exigences de l'aéronautique. Un chauffage par conduction permet notamment de chauffer la pièce d'ébauche P de manière homogène, complète et maîtrisée, grâce aux corps chauffants 3-1, 3-2 combinés aux thermorégulateurs 11 et aux thermocouples 12. Les corps chauffants 3-1, 3-2 peuvent en outre comprendre plusieurs portions chauffantes 31A, 31B, 31C, 32A, 32B, 32C contrôlables séparément pour consolider de manière homogène des pièces de géométrie complexe et d'épaisseurs variables.

Le système de fabrication 1 selon l'invention est en outre moins énergivore que l'autoclave de l'art antérieur grâce à un chauffage et une compression localisés au moyen des organes d'isolation thermique 4-1, 4-2 et de l'enveloppe 7. Le système de fabrication 1 est également moins chronophage car la vitesse de chauffage est augmentée grâce aux organes d'isolation thermique 4-1, 4-2 qui limitent les déperditions thermiques. Enfin, le système de fabrication 1 est économique en ce que des matériaux peu résistants à la chaleur peuvent être utilisés pour l'enveloppe et le dispositif de support notamment.

## Revendications

1. Système de fabrication (1) d'au moins une pièce thermoplastique destinée à être intégrée à une structure primaire d'un d'avion et formée à partir d'une pièce d'ébauche (P) comprenant des fibres de renfort noyées dans une matrice thermoplastique ayant une température de fusion supérieure à 200°C, ledit système de fabrication (1) comprenant :
- au moins un premier organe de moulage (2-1) et au moins un deuxième organe de moulage (2-2) configurés pour coopérer ensemble selon un axe vertical (X), ledit premier organe de moulage (2-1) comprenant une première face intérieure (20-1) comprenant une première empreinte (21-1) configurée pour donner un état de surface à une face supérieure (F1) de la pièce d'ébauche (P), ledit deuxième organe de moulage (2-2) comprenant une deuxième face intérieure (20-2), en vis-à-vis de la première face intérieure (20-1), comprenant une deuxième empreinte (21-2) configurée pour donner un état de surface à une face inférieure (F2) de la pièce d'ébauche (P),
- au moins un premier corps chauffant (3-1) monté sur le premier organe de moulage (2-1) selon l'axe vertical (X) et configuré pour chauffer par conduction le premier organe de moulage (2-1) à une température de chauffage (Tint) supérieure à 200°C, de manière à chauffer par conduction la pièce d'ébauche (P) à une température supérieure à sa température de fusion,
- au moins un dispositif d'alimentation électrique (6) du premier corps chauffant (3-1),
- au moins un premier organe d'isolation thermique (4-1) positionné sur le premier corps chauffant (3-1) selon l'axe vertical (X) et au moins un deuxième organe d'isolation thermique (4-2) positionné sous le deuxième organe de moulage (2-2) selon l'axe vertical (X), configurés pour délimiter ensemble une cavité fermée (5) dans laquelle sont positionnés au moins les organes de moulage (2-1, 2-2) et le premier corps chauffant (3-1),
- au moins une enveloppe (7) flexible et étanche délimitant un volume interne (8) fermé dans lequel sont positionnés au moins les organes de moulage (2-1, 2-2), le premier corps chauffant (3-1) et les organes d'isolation thermique (4-1, 4-2) et
- au moins un organe d'aspiration (9) configuré pour abaisser la pression intérieure (Pint) dans le volume interne (8) de l'enveloppe (7) par rapport à la pression extérieure (Pext), de manière à compresser la pièce d'ébauche (P) entre les organes de moulage (2-1, 2-2) au cours de son chauffage, afin de fabriquer la pièce thermoplastique.

2. Système de fabrication (1), selon la revendication 1, dans lequel le premier corps chauffant (3-1) est configuré pour chauffer le premier organe de moulage (2-1) à une température de chauffage (Tint) au moins égale à 350°C.

3. Système de fabrication (1), selon l'une des revendications 1 et 2, dans lequel l'organe d'aspiration (9) est configuré pour générer une différence de pression entre la pression intérieure (Pint) dans le volume interne (8) et la pression extérieure (Pext) comprise entre 1bar (1000hPa) et 15bars (15000hPa).

4. Système de fabrication (1), selon l'une des revendications 1 à 3, comprenant au moins un deuxième corps chauffant (3-2) positionné entre le deuxième organe de moulage (2-2) et le deuxième organe d'isolation thermique (4-2) selon l'axe vertical (X) et configuré pour chauffer par conduction le deuxième organe de moulage (2-2) à une température de chauffage (Tint) supérieure à 200°C, de manière à chauffer par conduction la pièce d'ébauche (P) à une température supérieure à sa température de fusion.

5. Système de fabrication (1), selon l'une des revendications 1 à 4, comprenant au moins un dispositif de support (10) positionné sous le deuxième organe d'isolation thermique (4-2), l'enveloppe (7) étant montée sur le dispositif de support (10) pour délimiter ensemble le volume interne (8).

6. Système de fabrication (1), selon la revendication 5, dans lequel le deuxième organe d'isolation thermique (4-2) et le dispositif de support (10) forment une unique entité.

7. Système de fabrication (1), selon l'une des revendications 1 à 6, dans lequel le deuxième organe de moulage (2-2) et le deuxième organe d'isolation thermique (4-2) forment une unique entité.

8. Système de fabrication (1), selon l'une des revendications 1 à 7, dans lequel le premier organe d'isolation thermique (4-1) se présente sous la forme d'une couche de matériau isolant, de préférence comportant un matériau microporeux, de préférence encore comportant de la silice pyrogénée.

9. Système de fabrication (1), selon la revendication 8, dans lequel la couche de matériau isolant comporte une épaisseur axiale comprise entre 3mm et 20mm.

10. Procédé de fabrication d'au moins une pièce thermoplastique destinée à être intégrée à une structure primaire d'un d'avion et formée à partir d'une pièce d'ébauche (P) comprenant des fibres de renfort noyées dans une matrice thermoplastique ayant une température de fusion supérieure à 200°C, le procédé de fabrication étant réalisé au moyen du système de fabrication (1) selon l'une des revendications 1 à 9, ledit procédé de fabrication comprenant :
- une étape de placement de la pièce d'ébauche (P) entre la première empreinte (21-1) du premier organe de moulage (2-1) et la deuxième empreinte (21-2) du deuxième organe de moulage (2-2),
- une étape de chauffage par conduction d'au moins le premier organe de moulage (2-1) à une température de chauffage (Tint) supérieure à 200°C, au moyen au moins du premier corps chauffant (3-1), de manière à chauffer par conduction la pièce d'ébauche (P) à une température supérieure à sa température de fusion et
- une étape de dépressurisation du volume interne (8) pendant l'étape de chauffage, grâce à l'organe d'aspiration (9), de manière à compresser la pièce d'ébauche (P) entre les organes de moulage (2-1, 2-2), afin de fabriquer la pièce thermoplastique.

## Patentansprüche

1. System zur Herstellung (1) von mindestens einem thermoplastischen Teil, das bestimmt ist, in einer primären Struktur eines Flugzeugs integriert zu sein und aus einem Rohling (P) geformt ist, der Verstärkungsfasern umfasst, die in eine thermoplastische Matrix mit einer Schmelztemperatur von über 200 °C eingebettet sind, wobei das Herstellungssystem (1) umfasst:
- mindestens ein erstes Formungsorgan (2-1) und mindestens ein zweites Formungsorgan (2-2), die ausgelegt sind, um gemeinsam gemäß einer vertikalen Achse (X) zusammenzuwirken, wobei das erste Formungsorgan (2-1) eine erste innere Fläche (20-1) umfasst, die einen ersten Abdruck (21-1) umfasst, der ausgelegt ist, um einer oberen Fläche (F1) des Rohlings (P) einen Oberflächenzustand zu geben, wobei das zweite Formungsorgan (2-2) eine zweite innere Fläche (20-2) gegenüber der ersten inneren Fläche (20-1) umfasst, die einen zweiten Abdruck (21-2) umfasst, der ausgelegt ist, um einer unteren Fläche (F2) des Rohlings (P) einen Oberflächenzustand zu geben,
- mindestens einen ersten Heizkörper (3-1), der auf dem ersten Formungsorgan (2-1) gemäß der vertikalen Achse (X) angebracht ist und ausgelegt, um durch Leitung das erste Formungsorgan (2-1) auf eine Heiztemperatur (Tint) von über 200 °C zu erwärmen, so dass der Rohling (P) durch Leitung auf eine Temperatur über seiner Schmelztemperatur erwärmt wird,
- mindestens eine Vorrichtung zur elektrischen Versorgung (6) des ersten Heizkörpers (3-1),
- mindestens ein erstes Wärmeisolationsorgan (4-1), das auf dem ersten Heizkörper (3-1) gemäß der vertikalen Achse (X) positioniert ist und mindestens ein zweites Wärmeisolationsorgan (4-2), das unter dem zweiten Formungsorgan (2-2) gemäß der vertikalen Achse (X) positioniert ist, die ausgelegt sind, um gemeinsam einen geschlossenen Hohlraum (5) zu begrenzen, in dem mindestens die Formungsorgane (2-1, 2-2) und der erste Heizkörper (3-1) positioniert sind,
- mindestens eine flexible und dichte Hülle (7), die ein geschlossenes inneres Volumen (8) begrenzt, in dem mindestens die Formungsorgane (2-1, 2-2), der erste Heizkörper (3-1) und die Wärmeisolationsorgane (4-1, 4-2) positioniert sind, und
- mindestens ein Ansaugorgan (9), das ausgelegt ist, um den Innendruck (Pint) im inneren Volumen (8) der Hülle (7) im Verhältnis zum Außendruck (Pext) derart zu senken, so dass der Rohling (P) zwischen den Formungsorganen (2-1, 2-2) während seiner Erwärmung komprimiert wird, um das thermoplastische Teil herzustellen.

2. Herstellungssystem (1) nach Anspruch 1, wobei der erste Heizkörper (3-1) ausgelegt ist, um das erste Formungsorgan (2-1) auf eine Heiztemperatur (Tint) von mindestens gleich 350 °C zu erwärmen.

3. Herstellungssystem (1) nach einem der Ansprüche 1 und 2, wobei das Ansaugorgan (9) ausgelegt ist, um eine Druckdifferenz zwischen dem Innendruck (Pint) im inneren Volumen (8) und dem Außendruck (Pext) zu erzeugen, die zwischen 1 bar (1000 hPa) und 15 bar (15000 hPa) liegt.

4. Herstellungssystem (1) nach einem der Ansprüche 1 bis 3, umfassend mindestens einen zweiten Heizkörper (3-2), der zwischen dem zweiten Formungsorgan (2-2) und dem zweiten Wärmeisolationsorgan (4-2) gemäß der vertikalen Achse (X) positioniert und ausgelegt ist, um das zweite Formungsorgan (2-2) durch Leitung auf eine Heiztemperatur (Tint) von über 200 °C zu erwärmen, so dass der Rohling (P) durch Leitung auf eine Temperatur über seiner Schmelztemperatur erwärmt wird.

5. Herstellungssystem (1) nach einem der Ansprüche 1 bis 4, umfassend mindestens eine Haltevorrichtung (10), die unter dem zweiten Wärmeisolationsorgan (4-2) positioniert ist, wobei die Hülle (7) auf der Haltevorrichtung (10) angebracht ist, um gemeinsam das innere Volumen (8) zu begrenzen.

6. Herstellungssystem (1) nach Anspruch 5, wobei das zweite Wärmeisolationsorgan (4-2) und die Haltevorrichtung (10) eine einzige Einheit bilden.

7. Herstellungssystem (1) nach einem der Ansprüche 1 bis 6, wobei das zweite Formungsorgan (2-2) und das zweite Wärmeisolationsorgan (4-2) eine einzige Einheit bilden.

8. Herstellungssystem (1) nach einem der Ansprüche 1 bis 7, wobei das erste Wärmeisolationsorgan (4-1) in Form einer Isolationsmaterialschicht vorliegt, die vorzugsweise ein mikroporöses Material aufweist, weiterhin vorzugsweise pyrogenes Siliziumdioxid aufweist.

9. Herstellungssystem (1) nach Anspruch 8, wobei die Isolationsmaterialschicht eine axiale Dicke aufweist, die zwischen 3 mm und 20 mm liegt.

10. Verfahren zur Herstellung von mindestens einem thermoplastischen Teil, das bestimmt ist, in einer primären Struktur eines Flugzeugs integriert zu sein und aus einem Rohling (P) geformt ist, der Verstärkungsfasern umfasst, die in eine thermoplastische Matrix mit einer Schmelztemperatur von über 200 °C eingebettet sind, wobei das Herstellungsverfahren mittels des Herstellungssystems (1) nach einem der Ansprüche 1 bis 9 durchgeführt wird, wobei das Herstellungsverfahren umfasst:
- einen Schritt des Platzierens des Rohlings (P) zwischen den ersten Abdruck (21-1) des ersten Formungsorgans (2-1) und den zweiten Abdruck (21-2) des zweiten Formungsorgans (2-2),
- einen Schritt des Erwärmens durch Leitung von mindestens dem ersten Formungsorgan (2-1) auf eine Heiztemperatur (Tint) von über 200 °C mittels mindestens des ersten Heizkörpers (3-1), so dass der Rohling (P) durch Leitung auf eine Temperatur über seiner Schmelztemperatur erwärmt wird, und
- einen Schritt der Druckentlastung des inneren Volumens (8) während des Heizschritts dank dem Ansaugorgan (9), so dass der Rohling (P) zwischen den Formungsorganen (2-1, 2-2) komprimiert wird, um das thermoplastische Teil herzustellen.

## Claims

1. A system for manufacturing (1) at least one thermoplastic part for being integrated into a primary structure of an aircraft and formed from a blank part (P) comprising reinforcing fibers embedded in a thermoplastic matrix having a melting temperature above 200°C, said manufacturing system (1) comprising:
- at least one first molding member (2-1) and at least one second molding member (2-2) configured to cooperate together along a vertical axis (X), said first molding member (2-1) comprising a first internal face (20-1) comprising a first impression (21-1) configured to give a surface condition to an upper face (F1) of the blank part (P), said second molding member (2-2) comprising a second internal face (20-2), opposite to the first internal face (20-1), comprising a second impression (21-2) configured to give a surface condition to a lower face (F2) of the blank part (P),
- at least one first heating body (3-1) mounted to the first molding member (2-1) along the vertical axis (X) and configured to heat the first molding member (2-1) through conduction to a heating temperature (Tint) above 200°C, so as to heat the blank (P) through conduction to a temperature above its melting temperature,
- at least one power supply device (6) for the first heating body (3-1),
- at least one first thermal insulation member (4-1) positioned on the first heating body (3-1) along the vertical axis (X) and at least one second thermal insulation member (4-2) positioned under the second molding member (2-2) along the vertical axis (X), configured so as to delimit together a closed cavity (5) in which at least the molding members (2-1, 2-2) and the first heating body (3-1) are positioned,
- at least one flexible sealed envelope (7) delimiting a closed inner volume (8) in which at least the molding members (2-1, 2-2), the first heating body (3-1) and the thermal insulation members (4-1, 4-2) are positioned and
- at least one suction member (9) configured to lower the internal pressure (Pint) in the inner volume (8) of the envelope (7) relative to the external pressure (Pext), so as to compress the blank part (P) between the molding members (2-1, 2-2) during its heating, in order to manufacture the thermoplastic part.

2. The manufacturing system (1) according to claim 1, wherein the first heating body (3-1) is configured to heat the first molding member (2-1) to a heating temperature (Tint) at least equal to 350°C.

3. The manufacturing system (1) according to one of claims 1 and 2, wherein the suction member (9) is configured to generate a pressure difference between the internal pressure (Pint) in the inner volume (8) and the external pressure (Pext) of between 1bar (1000hPa) and 15bar (15000hPa).

4. The manufacturing system (1), according to one of claims 1 to 3, comprising at least one second heating body (3-2) positioned between the second molding member (2-2) and the second thermal insulation member (4-2) along the vertical axis (X) and configured to heat the second molding member (2-2) through conduction to a heating temperature (Tint) above 200°C, so as to heat the blank part (P) through conduction to a temperature above its melting temperature.

5. The manufacturing system (1) according to one of claims 1 to 4, comprising at least one support device (10) positioned under the second thermal insulation member (4-2), the envelope (7) being mounted on the support device (10) to delimit together the inner volume (8).

6. The manufacturing system (1) according to claim 5, wherein the second thermal insulation member (4-2) and the support device (10) form a single entity.

7. The manufacturing system (1) according to one of claims 1 to 6, wherein the second molding member (2-2) and the second thermal insulation member (4-2) form a single entity.

8. The manufacturing system (1) according to one of claims 1 to 7, wherein the first thermal insulation member (4-1) is in the form of a layer of insulating material, preferably comprising a microporous material, more preferably comprising fumed silica.

9. The manufacturing system (1) according to claim 8, wherein the layer of insulating material comprises an axial thickness of between 3mm and 20mm.

10. A method for manufacturing at least one thermoplastic part for being integrated into a primary structure of an aircraft and formed from a blank part (P) comprising reinforcing fibers embedded in a thermoplastic matrix having a melting temperature above 200°C, the manufacturing method being carried out by means of the manufacturing system (1) according to one of claims 1 to 9, said manufacturing method comprising:
- a step of placing the blank part (P) between the first impression (21-1) of the first molding member (2-1) and the second impression (21-2) of the second molding member (2-2),
- a step of heating at least the first molding member (2-1) through conduction to a heating temperature (Tint) above 200°C, by means of at least the first heating body (3-1), so as to heat the blank part (P) through conduction to a temperature above its melting temperature, and
- a step of depressurizing the inner volume (8) during the heating step, by virtue of the suction member (9), so as to compress the blank part (P) between the molding members (2-1, 2-2), in order to manufacture the thermoplastic part.
